# EUROPEAN PATENT APPLICATION

(11) **EP 4 756 882 A1**
(43) Date of publication of application: **10.06.2026**
(21) Application number: 24877569.4
(22) Date of filing: 11.10.2024
(51) Int. Cl.: H01M 4/04, B30B 3/00, B65H 5/06

(54) **ELECTRODE ROLLING SYSTEM**

(30) Priority: 13.10.2023 KR 20230137051
(71) Applicant: LG Energy Solution, Ltd., Seoul 07335 (KR)
(72) Inventor: SHIN, Beom Ryong, Daejeon 34122 (KR)
(74) Representative: Goddar, Heinz J.
(86) International application number: PCT/KR2024/015436
(87) International publication number: WO 2025/080034

(57) **Abstract**

The present disclosure relates to an electrode rolling system, and more specifically, to an electrode rolling system that presses the surfaces of one side and the other side of an electrode during transfer of the electrode. An electrode rolling system according to an embodiment of the present disclosure may include a moving unit that moves an electrode; a compression unit installed on a moving path of the electrode and compressing the thickness of the electrode by pressing the electrode; and a void forming unit installed at the rear end of the compression unit in the moving path of the electrode and forming a plurality of voids on the surface of the electrode, so that the process of pressing the electrode surface and the process of forming voids on the electrode surface may be performed continuously within one system.

## Description

### TECHNICAL FIELD

### CROSS-REFERENCE TO RELATED APPLICATIONS

The present application claims priority to Korean Patent Application No. 10-2023-0137051 filed on October 13, 2023, with the Korean Intellectual Property Office. That is, by reference to Korean Patent Application No. 10-2023-0137051, the disclosure of which is incorporated herein in its entirety.

### TECHNICAL FIELD

The present disclosure relates to an electrode rolling system, and more specifically, to an electrode rolling system that presses the surfaces of one side and the other side of an electrode during transfer of the electrode.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may have a form in which a plurality of electrodes are alternately stacked with a separator interposed therebetween within an exterior material, and the inner space of the exterior material is filled with an electrolyte solution. The electrode used in the battery cell may have a structure in which an active material is coated on the surface of a metal current collector such as aluminum or copper.

An electrode having such a structure is accompanied by a pressing process in which the electrode is compressed by pressing the electrode surface to improve the coupling force between the active material coating layer and the current collector, and a void forming process in which voids are formed in the active material coating layer. Conventionally, a pressing device for performing the pressing process and a void forming device for performing the void forming process were provided separately, and the operator had to move the electrode to the void forming device after the pressing process. In this case, there was a problem of lowering work efficiency due to a delay between the pressing process and the void forming process.

### SUMMARY

### TECHNICAL PROBLEM

The present disclosure is designed to solve the problems of the related art, and therefore the present disclosure is directed to providing an electrode rolling system that continuously performs pressing of an electrode surface and formation of voids on the electrode surface.

### TECHNICAL SOLUTION

An electrode rolling system according to Embodiment 1 of the present disclosure may include a moving unit that moves an electrode; a compression unit installed on a moving path of the electrode and compressing the thickness of the electrode by pressing the electrode; and a void forming unit installed at the rear end of the compression unit in the moving path of the electrode and forming a plurality of voids on the surface of the electrode.

The compression unit may include a pair of pressing rollers that rotate in place and press the surfaces of one side and the other side of the moving electrode, respectively.

The void forming unit may include a first void forming unit that forms a plurality of voids on one side surface of the electrode; and a second void forming unit that is installed at the rear end of the first void forming unit and forms a plurality of voids on the other side surface of the electrode.

Each of the first void forming unit and the second void forming unit may include a cylindrical body portion that rotates in place; and a plurality of protrusions installed on the surface of the body portion.

The moving unit may include a plurality of transfer rollers that move the electrode by friction with the surface of the electrode.

The body portions of the first void forming unit and the second void forming unit may have the same size and structure as the transfer roller.

The protrusion may include a needle-shaped protrusion having a shape in which the cross-sectional area becomes narrower as it goes outward.

The body portion may maintain a predetermined distance from the electrode.

The needle-shaped protrusions may be disposed at equal intervals on the surface of the body portion.

Meanwhile, in an electrode rolling system according to Embodiment 2 of the present disclosure, the first void forming unit and the second void forming unit may press the surfaces of one side and the other side of the electrode, respectively, to sequentially bend the moving path of the electrode.

The protrusion may be made of a non-metallic material having a lower strength than the material of the electrode current collector included in the electrode.

The first void forming unit and the second void forming unit may be installed continuously on the moving path of the electrode.

The first void forming unit may press one side surface of the electrode in one direction, and the second void forming unit may press the other side surface of the electrode in the other direction.

The upper end of the transfer roller installed at the rear end of the second void forming unit may be positioned higher than the lower end of the second void forming unit.

### ADVANTAGEOUS EFFECTS

An electrode rolling system according to an embodiment of the present disclosure includes a moving unit that moves an electrode, a compression unit installed on a moving path of the electrode and compressing the thickness of the electrode by pressing the electrode, and a void forming unit installed at the rear end of the compression unit in the moving path of the electrode and forming a plurality of voids on the surface of the electrode, so that the process of pressing the electrode surface and the process of forming voids on the electrode surface are performed continuously within one system, and thus there is an advantageous effect of increasing the electrode manufacturing efficiency.

### BRIEF DESCRIPTION OF THE DRAWINGS

FIG. 1 is a view schematically showing an electrode rolling system according to Embodiment 1 of the present disclosure.
FIG. 2 is a view showing a state where voids are formed on the surface of an electrode in an electrode rolling system according to Embodiment 1 of the present disclosure.
FIG. 3 is a front view showing a first void forming unit in an electrode rolling system according to Embodiment 1 of the present disclosure.
FIG. 4 is an enlarged view showing part A of FIG. 3.
FIG. 5 is a right side view showing a first void forming unit in an electrode rolling system according to Embodiment 1 of the present disclosure.
FIG. 6 is a view schematically showing an electrode rolling system according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode rolling system according to the present disclosure will be described with reference to the drawings.

### Embodiment 1

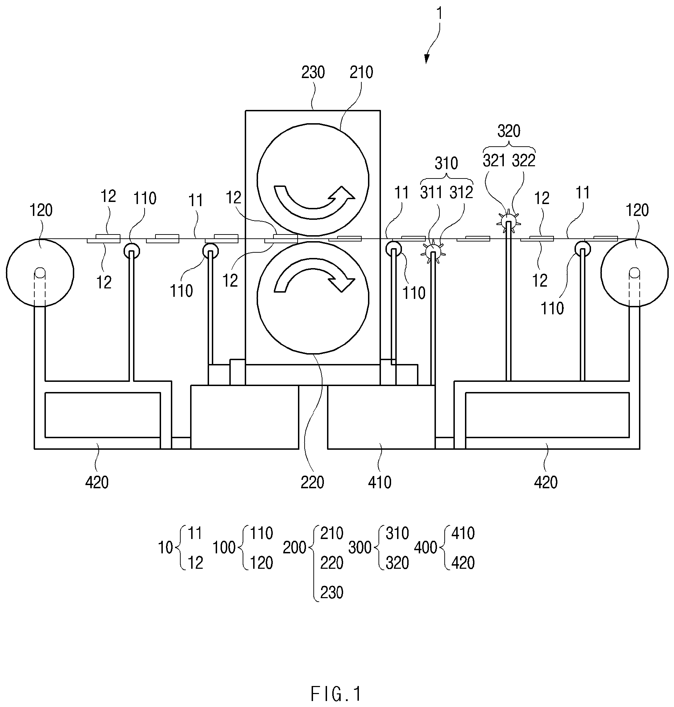

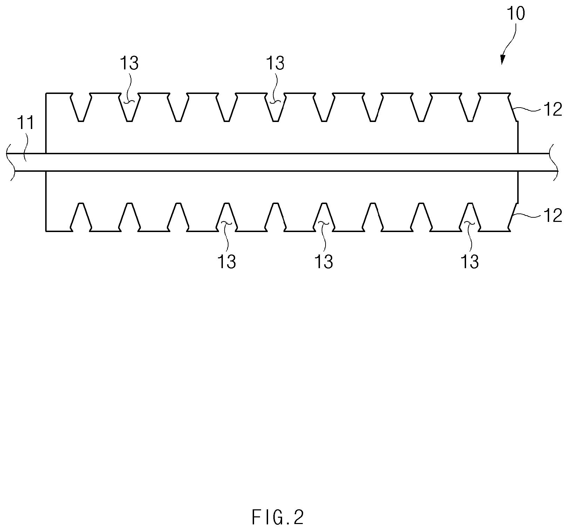

FIG. 1 is a view schematically showing an electrode rolling system according to Embodiment 1 of the present disclosure, and FIG. 2 is a view showing a state where voids are formed on the surface of an electrode in an electrode rolling system according to Embodiment 1 of the present disclosure.

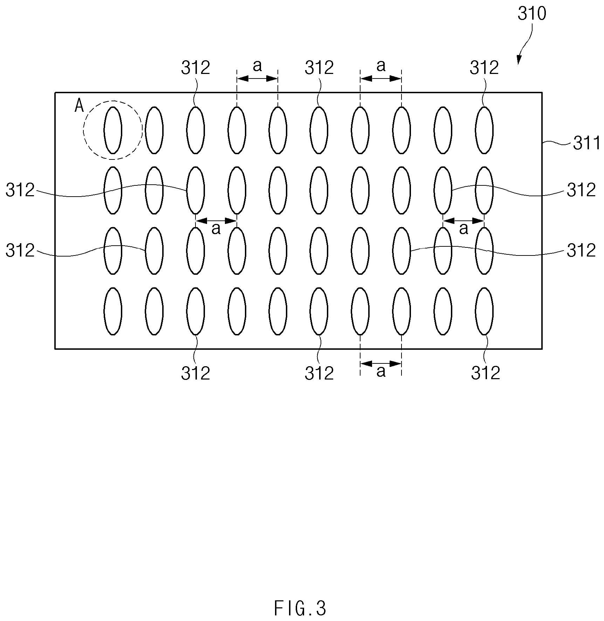

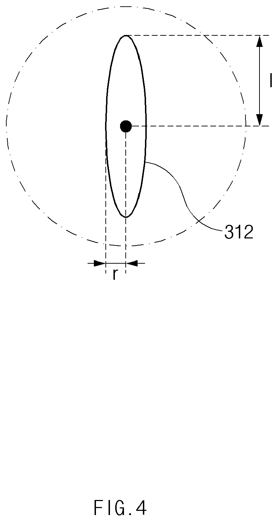

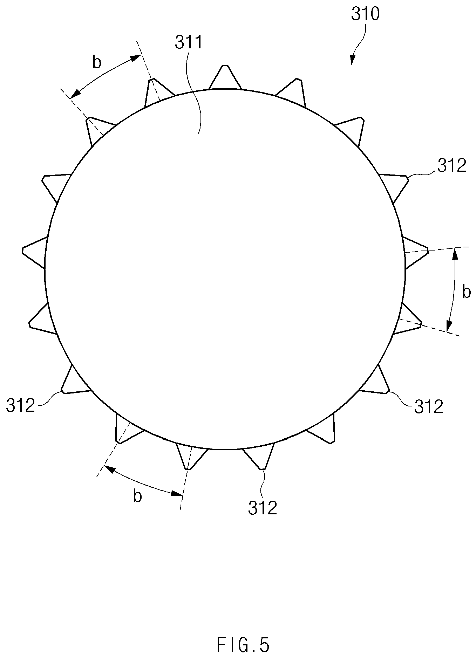

FIG. 3 is a front view showing a first void forming unit in an electrode rolling system according to Embodiment 1 of the present disclosure, and FIG. 4 is an enlarged view showing part A of FIG. 3. FIG. 5 is a right side view showing a first void forming unit in an electrode rolling system according to Embodiment 1 of the present disclosure.

Referring to FIGS. 1 and 2, an electrode rolling system 1 according to Embodiment 1 of the present disclosure includes a moving unit 100 that moves an electrode 10, a compression unit 200 installed on a moving path of the electrode 10 and compressing the thickness of the electrode 10 by pressing the electrode 10, and a void forming unit 300 installed at the rear end of the compression unit 200 in the moving path of the electrode 10 and forming a plurality of voids 13 on the surface of the electrode 10. In this case, the process of pressing the electrode 10 surface and the process of forming voids 13 on the electrode 10 surface are performed continuously within one system, and thus there is an advantageous effect of increasing the electrode manufacturing efficiency.

The electrode 10 is a positive electrode or a negative electrode used in a secondary battery that can be charged and discharged, and may be alternately stacked with a separator interposed therebetween within an exterior material of the secondary battery. The electrode 10 may include an electrode current collector 11 made of a metal such as aluminum or copper, and an active material coating layer 12 applied to both surfaces of the electrode current collector 11. Here, the active material coating layer 12 is a positive electrode active material layer or a negative electrode active material layer, and lithium cobalt oxide (LCO), copper, or the like may be used therefor. An uncoated portion of the surface of the electrode current collector 11 where the active material coating layer 12 is not applied may be an electrode tab. In this case, the electrode tab may be connected to an electrode lead to transmit an electrical signal of the electrode 10 to the outside.

The moving unit 100 is a member that rotates in place to move the electrode 10 in one direction, and a plurality of moving units 100 may be provided in the electrode rolling system 1. The moving unit 100 may be provided in various ways within the electrode rolling system 1. For example, the electrode rolling system 1 may include a plurality of first transfer rollers 110 and second transfer rollers 120 arranged at one end and the other end of the transfer path of the electrode 10 of the electrode rolling system 1, respectively.

Here, the first transfer roller 110 and the second transfer roller 120 are cylindrical rollers that are coupled to a rotor and rotate in place, and the first transfer roller 110 and the second transfer roller 120 may have the same size or different sizes. For example, the second transfer roller 120 may be larger than the first transfer roller 110. In this case, the diameter of the second transfer roller 120 is formed to be larger than the diameter of the first transfer roller 110, so that the magnitude of the torque applied by the second transfer roller 120 to the surface of the electrode 10 may be larger than the magnitude of the torque applied by the first transfer roller 110 to the surface of the electrode 10.

Additionally, the first transfer roller 110 and the second transfer roller 120 may configure the moving path of the electrode 10 in various ways. For example, the moving path of the electrode 10 may have a straight shape that is not bent. In this case, the electrode 10 is transferred along the straight path in a tautly pulled state within the electrode rolling system 1, and the compression unit 200 and the void forming unit 300 may also be arranged at positions adjacent to the linear electrode moving path.

Meanwhile, the first transfer roller 110 and the second transfer roller 120 may be installed in various ways within the electrode rolling system 1. For example, the first transfer roller 110 and the second transfer roller 120 may be installed on each of the rods formed to extend upward from the support unit 400 to be described later.

The compression unit 200 compresses the thickness of the electrode 10 by pressing the electrode 10, and may be configured in various ways on the moving path of the electrode 10. For example, the compression unit 200 may include a pair of pressing rollers 210, 220 that rotate in place and press the surfaces of one side and the other side of the moving electrode 10, respectively.

Here, the first pressing roller 210 and the second pressing roller 220 may be installed to face each other with the moving path of the electrode 10 interposed therebetween. Specifically, the first pressing roller 210 may be installed above the moving path of the electrode 10, and the second pressing roller 220 may be installed below the moving path of the electrode 10. At this time, the first pressing roller 210 and the second pressing roller 220 may compress the thickness of the electrode 10 by pressing the surface of the electrode 10 passing between the first pressing roller 210 and the second pressing roller 220.

When the thickness of the electrode 10 is compressed in this way, the volume of the electrode 10 decreases, and thus the energy density of the electrode 10 may increase. Additionally, the active material coating layer 12 within the electrode 10 is in close contact with the electrode current collector 11, and thus the coupling force between the electrode current collector 11 and the active material coating layer 12 may increase.

Meanwhile, the first pressing roller 210 and the second pressing roller 220 may be installed in various ways within the electrode rolling system 1. For example, the first pressing roller 210 and the second pressing roller 220 are installed on a support block 230 in the form of a hexahedral box extending long in the vertical direction, and the first pressing roller 210 and the second pressing roller 220 installed on the support block 230 may rotate in place and press the electrode 10.

The void forming unit 300 forms a plurality of voids 13 on the surface of the electrode 10, and may be installed on the moving path of the electrode 10. Here, a plurality of voids 13 are formed in the active material coating layer 12 of the electrode 10 that has passed through the void forming unit 300, and thus the electrolyte solution may penetrate deep into the electrode 10.

The void forming unit 300 may be installed at the rear end of the compression unit 200 on the moving path of the electrode 10. Here, the compression unit 200 and the void forming unit 300 are installed continuously within the electrode rolling system 1, so that the process of pressing the electrode 10 surface and the process of forming voids 13 on the electrode 10 surface may be performed continuously within one system. In this case, the process of pressing the electrode 10 surface and the process of forming voids 13 on the electrode 10 surface are performed continuously within one system without the operator separately transferring the electrode 10, and thus there is an advantageous effect of increasing the electrode manufacturing efficiency.

The support unit 400 is installed at the bottom of the electrode rolling system 1 to support the moving unit 100, the compression unit 200, and the void forming unit 300, and may be configured in various ways. For example, the support unit 400 may include a first support unit 410 arranged at the lower center of the electrode rolling system 1 and a second support unit 420 provided at the front and rear of the first support unit 410, respectively. The first support unit 410 and the second support unit 420 may have various structures, and the support block 230 described above may be installed above the first support unit 410.

Meanwhile, the void forming unit 300 may include a first void forming unit 310 that forms a plurality of voids 13 on one side surface of the electrode 10 and a second void forming unit 320 that is installed at the rear end of the first void forming unit 310 and forms a plurality of voids 13 on the other side surface of the electrode 10. In this case, there is an advantageous effect that a plurality of voids 13 are automatically formed sequentially on each of the one side surface and the other side surface of the pressed electrode 10.

Here, the first void forming unit 310 and the second void forming unit 320 may be installed at various positions within the electrode rolling system 1. For example, the first void forming unit 310 may be installed at the rear end of the compression unit 200, and one or more first transfer rollers 110 may be provided between the compression unit 200 and the first void forming unit 310.

The second void forming unit 320 is installed at the rear end of the first void forming unit 310, and one or more first transfer rollers 110 may be provided between the first void forming unit 310 and the second void forming unit 320. Additionally, a second transfer roller 120 may be installed at the rear end of the second void forming unit 320, and one or more first transfer rollers 110 may be provided between the second void forming unit 320 and the second transfer roller 120.

Additionally, the first void forming unit 310 may be installed below the moving path of the electrode 10 to form a void 13 on the lower surface of the electrode 10, and the second void forming unit 320 may be installed above the moving path of the electrode 10 to form a void 13 on the upper surface of the electrode 10. Specifically, the first void forming unit 310 may form a void in the lower active material coating layer 12 of the electrode 10 in a tautly pulled state moving along the moving path, and the second void forming unit 320 may form a void in the upper active material coating layer 12 of the electrode 10 in a tautly pulled state moving along the moving path.

Meanwhile, the first void forming unit 310 and the second void forming unit 320 may be formed in various ways. For example, the first void forming unit 310 may include a cylindrical first body portion 311 that rotates in place and a plurality of first protrusions 312 installed on the surface of the first body portion 311. Likewise, the second void forming unit 320 may include a cylindrical second body portion 321 that rotates in place and a plurality of second protrusions 322 installed on the surface of the second body portion 321.

Here, the first body portion 311 and the second body portion 321 are cylindrical members that are coupled to a rotor and rotate in place, and may have various sizes and structures. For example, the first body portion 311 and the second body portion 321 may have the same size and structure as the moving unit 100 described above.

Additionally, the plurality of first protrusions 312 rotate according to the rotation of the first body portion 311 and form voids in the lower active material coating layer 12 of the electrode 10, and may be configured in various ways. For example, the first protrusions 312 may be needle-shaped protrusions having a shape in which the cross-section becomes narrower as they go outward. Likewise, the plurality of second protrusions 322 rotate according to the rotation of the second body portion 321 and form voids in the upper active material coating layer 12 of the electrode 10, and may be configured in various ways. The second protrusions 322 may be needle-shaped protrusions having a shape in which the cross-section becomes narrower as they go outward.

Meanwhile, as shown in FIGS. 3 to 5, the plurality of first protrusions 312 may be disposed at equal intervals on the surface of the first body portion 311. Specifically, the longitudinal distance (a) of the first body portion 311 between the adjacent first protrusions 312 may all have a constant value. Additionally, the circumferential distance (b) of the first body portion 311 between the adjacent first protrusions 312 may all have a constant value.

Likewise, the plurality of second protrusions 322 may be disposed at equal intervals on the surface of the second body portion 321. Specifically, each of the longitudinal distance and the circumferential distance of the second body portion 321 between the adjacent second protrusions 322 may all have a constant value. In this way, when the first protrusions 312 and the second protrusions 322 are disposed at equal intervals on the surfaces of the first body portion 311 and the second body portion 321, respectively, there is an advantageous effect of uniformly forming a plurality of voids 13 on both surfaces of the electrode 10.

In this case, the first protrusion 312 may have various shapes. For example, the bottom surface of the first protrusion 312 may have an elliptical shape in which the length of the short radius (r) and the length of the long radius (1) are different. The lengths of the short radius (r) and the long radius (1) may be configured in various ways. For example, the short radius (r) may have a length between 20 mm and 50 mm, and the long radius (1) may have a length between 50 mm and 100 mm.

Likewise, the second protrusion 322 may also have various shapes. For example, the bottom surface of the second protrusion 322 may have an elliptical shape in which the length of the short radius and the length of the long radius are different, and the lengths of the short radius and the long radius of the second protrusion 322 may be configured in various ways.

Additionally, the heights of the centers of the first protrusion 312 and the second protrusion 322 may be formed in various ways. For example, when the first protrusion 312 and the second protrusion 322 are cylindrical needle-shaped protrusions, the heights of the centers of the first protrusion 312 and the second protrusion 322 may have a value of 2 mm or less.

Meanwhile, the first protrusion 312 and the second protrusion 322 may be made of various materials. For example, the first protrusion 312 and the second protrusion 322 may be made of a metal material such as aluminum and iron.

### Embodiment 2

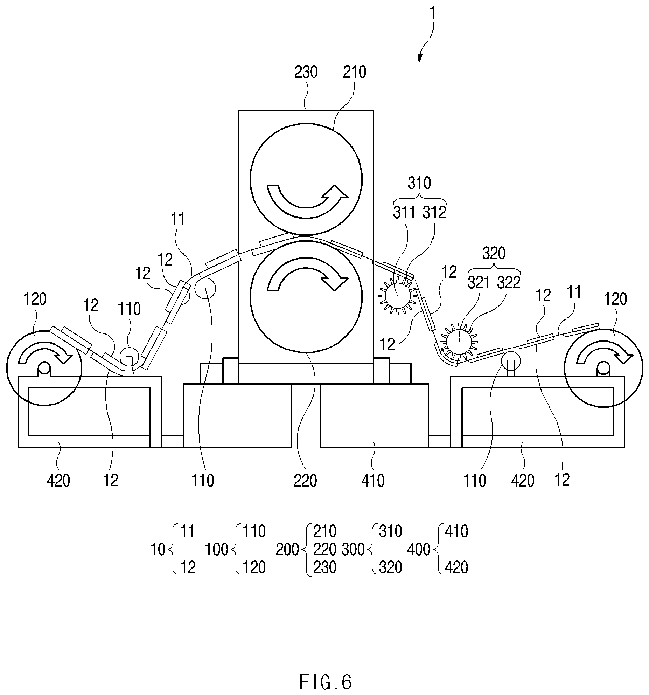

FIG. 6 is a view schematically showing an electrode rolling system according to Embodiment 2 of the present disclosure.

The electrode rolling system according to Embodiment 2 of the present disclosure differs from Embodiment 1 in that the void forming unit presses the surface of the electrode to bend the moving path of the electrode. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

Referring to FIG. 6, in the electrode rolling system 1 according to Embodiment 2 of the present disclosure, the first void forming unit 310 and the second void forming unit 320 may press the surfaces of one side and the other side of the electrode 10, respectively, to sequentially bend the moving path of the electrode 10. That is, the first void forming unit 310 and the second void forming unit 320 may bend the electrode 10 and simultaneously form voids 13 on the bent surface of the electrode 10. Therefore, the first void forming unit 310 and the second void forming unit 320 form voids 13 on the surface of the electrode 10 while in contact with the bent surface of the electrode 10, and thus there is an advantageous effect of effectively forming voids 13 on the surface of the electrode 10.

Here, the first void forming unit 310 may include a first body portion 311 having a cylindrical shape that rotates in place and a plurality of first protrusions 312 installed on the surface of the first body portion 311. Likewise, the second void forming unit 320 may include a second body portion 321 having a cylindrical shape that rotates in place and a plurality of second protrusions 322 installed on the surface of the second body portion 321.

At this time, the first protrusion 312 and the second protrusion 322 may be made of a non-metallic material having a higher mechanical strength than the material forming the active material coating layer 12 of the electrode 10 and a lower mechanical strength than the metal material forming the electrode current collector 11. In this case, the first protrusion 312 and the second protrusion 322 have an advantageous effect of forming voids 13 only in the active material coating layer 12 without damaging the electrode current collector 11.

In particular, the first protrusion 312 and the second protrusion 322 may be made of an elastic material such as silicon. Here, the first protrusion 312 and the second protrusion 322 are made of an elastic material, which may effectively bend the moving path of the electrode 10 by pressing one surface and/or the other surface of the electrode 10.

Meanwhile, the first void forming unit 310 and the second void forming unit 320 may be installed continuously on the moving path of the electrode 10. The first void forming unit 310 and the second void forming unit 320 are installed on each of the rods formed to extend upward from the support unit 400, and no moving unit 100 may be installed between the first void forming unit 310 and the second void forming unit 320.

Additionally, the first void forming unit 310 may press one side surface of the electrode 10 in one direction, and the second void forming unit 320 may press the other side surface of the electrode 10 in the other direction. Specifically, the first void forming unit 310 may be installed below the electrode 10 to press the lower surface of the electrode 10 upward, and the second void forming unit 320 may be installed above the electrode 10 to press the upper surface of the electrode 10 downward.

Here, the first void forming unit 310 may be disposed above the second void forming unit 320. In this case, the first void forming unit 310 may press the lower surface of the electrode 10 upward at a position higher than the second void forming unit 320, and the second void forming unit 320 may press the upper surface of the electrode 10 downward at a position lower than the first void forming unit 310.

On the other hand, the upper end of the moving unit 100 installed at the rear end of the second void forming unit 320 may be positioned higher than the lower end of the second void forming unit 320. Specifically, the upper end of the first transfer roller 110 installed at the rear end of the second void forming unit 320 may be positioned higher than the lower end of the second void forming unit 320. Here, the moving path of the electrode 10 may include a U-shaped curve path formed before and after the second void forming unit 320. In this case, the second void forming unit 320 presses a wider area of the surface of the electrode 10, and thus there is an advantageous effect of effectively forming the void 13 in the electrode 10.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 1: | Electrode rolling system | 10: | Electrode |
| 11: | Electrode current collector | 12: | Active material coating layer |
| 13: | Void | 100: | Moving unit |
| 110: | First transfer roller | 120: | Second transfer roller |
| 200: | Compression unit | 210: | First pressing roller |
| 220: | Second pressing roller | 300: | Void forming unit |
| 310: | First void forming unit | 311: | First body portion |
| 312: | First protrusion | 320: | Second void forming unit |
| 321: | Second body portion | 322: | Second protrusion |
| 400: | Support unit | 410: | First support unit |
| 420: | Second support unit | | |

## Claims

1. An electrode rolling system, comprising:
a moving unit that moves an electrode;
a compression unit installed on a moving path of the electrode and compressing the thickness of the electrode by pressing the electrode; and
a void forming unit installed at the rear end of the compression unit in the moving path of the electrode and forming a plurality of voids on the surface of the electrode.

2. The electrode rolling system according to claim 1,
wherein the compression unit comprises:
a pair of pressing rollers that rotate in place and press the surfaces of one side and the other side of the moving electrode, respectively.

3. The electrode rolling system according to claim 1,
wherein the void forming unit comprises:
a first void forming unit that forms a plurality of voids on one side surface of the electrode; and
a second void forming unit that is installed at the rear end of the first void forming unit and forms a plurality of voids on the other side surface of the electrode.

4. The electrode rolling system according to claim 3,
wherein each of the first void forming unit and the second void forming unit comprises:
a cylindrical body portion that rotates in place; and
a plurality of protrusions installed on the surface of the body portion.

5. The electrode rolling system according to claim 4,
wherein the moving unit comprises:
a plurality of transfer rollers that move the electrode by friction with the surface of the electrode.

6. The electrode rolling system according to claim 5,
wherein the body portions of the first void forming unit and the second void forming unit have the same size and structure as the transfer roller.

7. The electrode rolling system according to claim 4,
wherein the protrusion comprises a needle-shaped protrusion having a shape in which the cross-sectional area becomes narrower as it goes outward.

8. The electrode rolling system according to claim 4,
wherein the body portion maintains a predetermined distance from the electrode.

9. The electrode rolling system according to claim 7,
wherein the needle-shaped protrusions are disposed at equal intervals on the surface of the body portion.

10. The electrode rolling system according to claim 5,
wherein the first void forming unit and the second void forming unit press the surfaces of one side and the other side of the electrode, respectively, to sequentially bend the moving path of the electrode.

11. The electrode rolling system according to claim 10,
wherein the protrusion is made of a non-metallic material having a lower strength than the material of the electrode current collector included in the electrode.

12. The electrode rolling system according to claim 10,
wherein the first void forming unit and the second void forming unit are installed continuously on the moving path of the electrode.

13. The electrode rolling system according to claim 12,
wherein the first void forming unit presses one side surface of the electrode in one direction, and
the second void forming unit presses the other side surface of the electrode in the other direction.

14. The electrode rolling system according to claim 13,
wherein the upper end of the transfer roller installed at the rear end of the second void forming unit is positioned higher than the lower end of the second void forming unit.
